# FASCICULE DE BREVET EUROPEEN

(11) **EP 0 660 253 B1**
(45) Date de publication et mention de la délivrance du brevet: **24.05.2000**
(21) Numéro de dépôt: 94403017.0
(22) Date de dépôt: 26.12.1994
(51) Int. Cl.: G06K 7/06, H01R 13/629

(54) **Bande de contacts et connecteur pour carte la comprenant**
Kontaktstreifen und diesen enthaltender Verbinder
Strip of contacts and connector comprising the same

(30) Priorité: 27.12.1993 FR 9315682
(43) Date de publication de la demande: 28.06.1995
(73) Titulaire: FRAMATOME CONNECTORS INTERNATIONAL, 92400 Courbevoie, Paris (FR)
(72) Inventeur: Pernet, Michel, F-25300 Pontarlier (FR)
(74) Mandataire: Keib, Gérard

(56) Documents cités:
- EP-A- 0 344 058
- EP-A- 0 366 513
- EP-A- 0 542 231
- WO-A-91/04547
- FR-A- 2 623 314

## Description

La présente invention a pour objet une bande de contacts comprenant des lames de contacts adjacentes.

Dans les connecteurs de cartes, en particulier les cartes électroniques ou cartes à puce, on dispose généralement un contacteur ayant une fonction de détection de présence de la carte et plus particulièrement de fin de course de celle-ci.

De tels connecteurs sont décrits en particulier dans la demande de brevet européen EP 366 513 (ITT) et dans la demande de brevet français FR 2 623 314 (ALCATEL CIT). Selon ces brevets, une lame mobile est sollicitée par une force élastique dans une direction opposée au mouvement d'insertion par translation d'une carte dans le lecteur, un bord de la carte venant appuyer contre elle et l'entraînant dans un mouvement d'actionnement à l'encontre de la force élastique.

Ces détecteurs de fin de course du type précité ont pour inconvénients d'une part de prendre de l'espace sur un bord du connecteur de carte et notamment d'en augmenter l'épaisseur et d'autre part de ne pouvoir servir qu'à une détection de fin de course dans le cas de lecteur à insertion de carte à l'horizontale.

Une bande de contacts électriques de détection de fin de course d'une carte pour connecteur de carte est déjà connue de la demande de brevet EP-A-0542231. Cette bande de contact possède toutes les caractéristiques figurant dans le préambule de la revendication 1. EP-A-0542231 décrit également un connecteur pour carte électronique comportant un contacteur de détection de présence de la carte. Ce connecteur posséde toutes les caractéristiques du préambule de la revendication 6.

La présente invention a pour but une bande de contacts présentant des contacts permettant d'assurer une détection de la présence d'une carte ou bien la détection de fin de course d'une carte, que celle-ci soit à insertion par translation, ou par rabattement d'un couvercle articulé sur un cadre de contact comprenant lesdits éléments de contact.

La présente invention concerne ainsi une bande de contacts électriques Velle que définie à la revendication 1.

La région en saillie est avantageusement disposée à proximité du prolongement distal.

Le prolongement distal peut être constitué par un doigt ayant un axe longitudinal sensiblement perpendiculaire à l'axe longitudinal de la deuxième lame métallique.

L'invention concerne également un connecteur Vel que défini à la revendication 5.

La région en saillie peut être disposée à proximité dudit prolongement distal.

Le connecteur comporte avantageusement une région de butée pour former une butée pour le support plat selon une ligne de butée, la région en saillie étant disposée à proximité de la ligne de butée de telle sorte que ledit contacteur forme un détecteur de fin de course du support plat.

Le prolongement distal peut être constitué par un doigt ayant un axe longitudinal sensiblement perpendiculaire à l'axe longitudinal de la deuxième lame métallique.

Le prolongement distal peut, selon un mode de réalisation préféré être situé en aval de la ligne de butée de la carte par rapport à la direction d'insertion de celle-ci.

D'autres caractéristiques et avantages de l'invention apparaîtront mieux à la lecture de la description qui va suivre donnée à titre d'exemple non limitatif en liaison avec les dessins qui représentent :
- la figure 1 une bande de contacts selon l'invention avec en partie gauche une paire de contacts adjacents avant formage et en partie droite une paire de contacts adjacents après formage ;
- les figures 2a et 2b une vue de profil des lames de contact selon l'invention au cours de deux étapes successives de formage, la figure 2b représentant la forme définitive du contact ;
- les figures 3a et 3b représentent respectivement en vue de dessus et en vue latérale un cadre de contact comportant une bande de contacts selon l'invention avant opération de découpe des rives ;
- les figures 4a et 4b respectivement en vue latérale et en vue de dessus un connecteur pour carte selon l'invention.

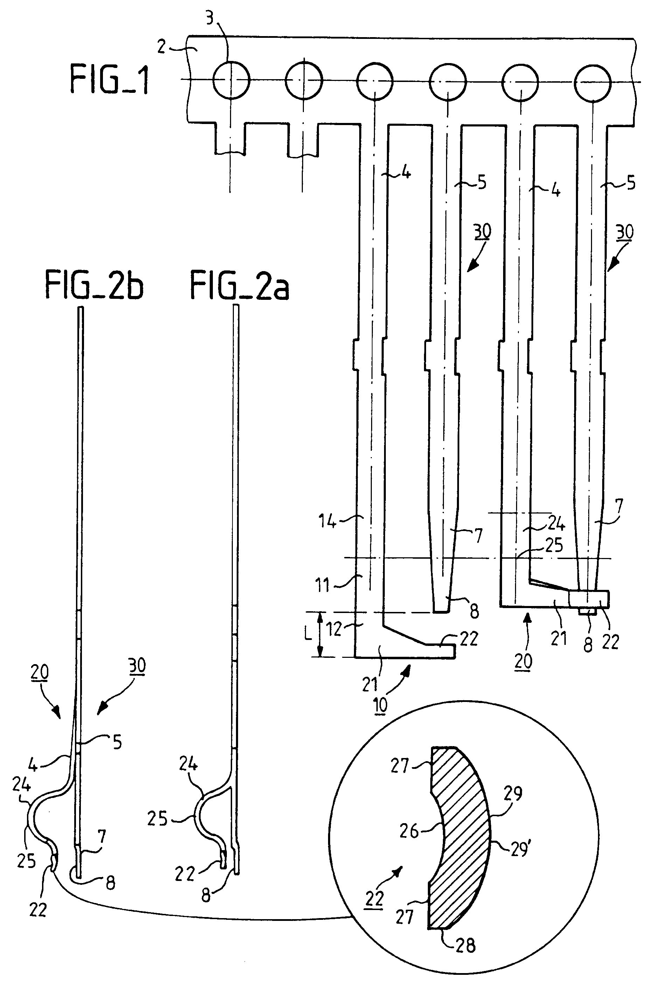

La figure 1 représente une bande de contacts 1 suivant l'invention présentant une rive 2 et des ouvertures de préhension 3, ainsi que des paires de contacts en forme de lames 4 et 5 comportant une lame de contact active représentée par le repère général 10 avant cambrage et par le repère général 20 après cambrage ainsi qu'une lame passive 30 avec laquelle une palette 21 présentant une extrémité de contact 22 vient établir un contact électrique avec l'extrémité distale 8 de la lame passive 30 lorsqu'un support plat tel qu'une carte vient exercer une force d'appui sur la région 24 en forme de crosse de la lame active 20.

Comme représenté plus particulièrement à la figure 1, la lame 10 telle qu'elle vient immédiatement après découpe brute de la bande de contacts 1 représente une extrémité distale 12 présentant la palette 21 précitée qui dépasse d'une longueur L de l'extrémité distale 8 de la lame passive 30. Après cambrage, la lame active maintenant référencée 20 présente une région en forme de crosse 24 présentant un sommet 25, cette région 24 étant située de préférence à proximité immédiate de la palette 21. Après cambrage, la palette 21, qui s'étend en direction de la lame passive 30 voit son extrémité distale 22 disposée en recouvrement avec l'extrémité distale 8 de la lame passive 30. L'extrémité distale 8 se raccorde au tronçon principal 5 de la lame passive 30, par une région 7 dont la largeur va diminuant au fur et à mesure qu'on se rapproche de l'extrémité distale 8, ce qui confère à cette région d'extrémité 7 une élasticité supérieure à celle du reste de la lame 30 qui est destinée à être surmoulée dans un cadre de contact.

Dans les figures 2a et 2b on a représenté la réalisation du cambrage de la lame 20 en deux étapes, à savoir, la première étape de cambrage proprement dit au cours de laquelle est réalisée d'une manière connue la région en forme de crosse 24, et au cours de laquelle est également obtenue une légère incurvation de la région d'extrémité de la palette 22 (voir encadré).

La seconde étape consiste à écarter légèrement le contact 20 du plan de la lame 30 afin de définir une course donnée pour le contact de détection.

La figure 2b représente donc la lame 20 une fois terminée. On remarquera en encadré que la section d'extrémité 22 présente une région convexe 29 dont le sommet 29' définit un point de contact avec la région distale 8 convexe selon un axe perpendiculaire à la région 29 comme le montrent les figures 2a et 2b. A l'opposé de la région convexe 29, la région d'extrémité 22 présente une région concave se raccordant par deux faces 27 aux bords latéraux 28 de la région d'extrémité 22 de la palette 21.

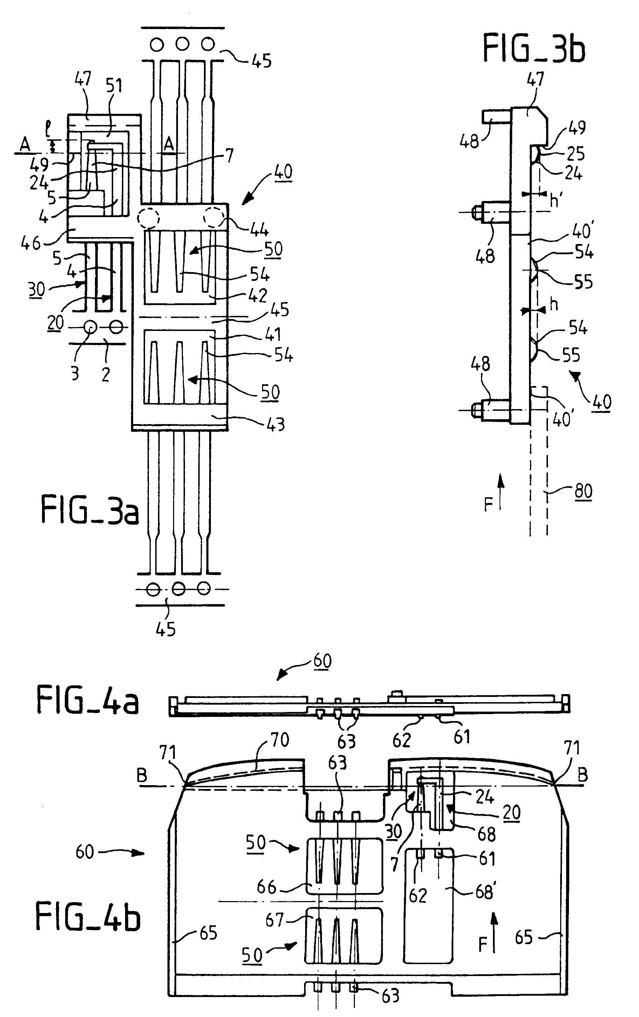

Aux figures 3a et 3b on a représenté la bande de contacts précitée montée dans un cadre de contacts désigné par le repère général 40 présentant également des éléments de contact 50 disposés en deux rangées et destinés à réaliser de manière connue un contact électrique avec une carte électronique par appui de régions conductrices de la carte sur les sommets 55 de région en forme de crosse 54 des contacts 50. Les contacts 50 sont disposés dans des ouvertures ou lumières respectivement 41 et 42 du cadre 40 alors que les lames 20 et 30 sont disposées dans une ouverture ou lumière 51 du cadre 40. On remarquera que les lames 20 et 30 sont surmoulées dans le cadre de contact de manière que soit disposées librement les régions de raccordement 7 et 24 précitées ainsi qu'une petite portion de la lame 5 qui va servir ultérieurement après pliage et élimination des bandes de rive 2 à définir les contacts de sortie 61 et 62 du contact de détection de carte.

La carte 80 est introduite parallèlement (selon la flèche F) à une face dite face supérieure 40' du cadre de contact 40. Cette face 40' constitue un plan dit plan de positionnement de la carte 80. La paire de lames 20 et 30 selon l'invention sert avantageusement non seulement de détection de présence de la carte mais également de détection de fin de course de la carte. Pour ce faire, la région en forme de crosse 24 est disposée au voisinage d'une face de butée 49 d'un rebord 47 bordant le logement 51, ce qui définit une ligne de butée AA de la carte. Les sommets 55 des crosses 54 des éléments de contact 50 dépassent d'une hauteur h du plan 40'. Les sommets 25 de la crosse 24 dépassent du plan 40' d'une hauteur h'. Dans la figure 3b on a représenté ces hauteurs comme étant égales. On comprendra que, par exemple dans le cas où le cadre de contact doit être utilisé dans un connecteur de cadre du type dans lequel la carte est disposée dans un couvercle qui est articulé par rapport au cadre de contact et qui est ensuite rabattu, il est avantageux que la hauteur h' soit inférieure à h, ce qui permet d'assurer une sécurité de mise en contact, la distance "d" entre les régions de contact 22 et 8 étant par ailleurs choisie inférieure à h-h'.

Dans le cas où le cadre de contact est mis et en oeuvre avec un connecteur de carte à couvercle articulé, la paire de contacts 20 et 30 permet une détection de fin de course quelle que soit sa position dans le cadre de contact.

On remarquera en outre que dans les figures 3a et 3b, le cadre de contact 40 est muni de plots 48 permettant son montage par insertion dans un connecteur de carte.

Les figures 4a et 4b représentent un connecteur désigné par le repère général 60 et qui est obtenu par surmoulage direct des contacts. Les contacts 50 présentant des broches repliées 63 sont disposés en deux rangées respectivement dans des lumières 66 et 67 alors que les lames de détection 20 et 30 sont disposées dans une lumière 68 et leurs broches de contact repliées 61 et 62 sont disposées dans une lumière 68'. On notera que pour une insertion de la carte dans la direction représentée par la flèche F, le rebord avant 70 qui est incurvé présente deux points extrêmes latéraux 71 définissant une ligne de butée BB pour la carte. Comme dans le cas de la figure 3, la palette 21 est disposée au-delà de cette ligne BB par rapport à la direction d'insertion F de la carte 80 ce qui permet de protéger la palette 21 au cours de l'insertion, le contact s'effectuant par appui sur la région 24 en forme de crosse.

## Revendications

1. Bande de contacts électriques de détection de fin de course d'une carte pour connecteur de carte comprenant des lames de contacts adjacentes, ladite bande comportant au moins une paire de lames de contact adjacentes (10, 20, 30) ayant chacune un axe longitudinal et dont une première lame (20) présente une longueur développée plus grande que la deuxième lame (30), la première lame présentant un prolongement distal (21, 22) s'étendant en direction de la deuxième lame (30), caractérisée en ce que la première lame (20) comporte une région en saillie (24), par rapport au plan de la bande, et en ce que au moins une partie du prolongement distal est en recouvrement avec la deuxième lame (30) vue selon une direction perpendiculaire au plan de la bande.

2. Bande de contact selon la revendication 1, caractérisée en ce que le prolongement distal (21, 22) est en recouvrement avec une extrémité distale (8) de la deuxième lame.

3. Bande de contacts selon l'une des revendications 1 ou 2, caractérisée en ce que la région en saillie (24) est disposée à proximité dudit prolongement distal (21, 22).

4. Bande de contacts selon une des revendications précédentes, caractérisée en ce que ledit prolongement distal (21, 22) est constitué par un doigt (21) ayant un axe longitudinal sensiblement perpendiculaire à l'axe longitudinal de la deuxième lame (30).

5. Connecteur pour support plat tel qu'une carte électronique comportant un contacteur de détection de présence du support plat, caractérisé en ce que ledit contacteur comporte une paire de lames (20, 30) de contacts adjacentes disposées dans un même plan et ayant chacune un axe longitudinal et dont une première lame (20) présente une longueur développée plus grande que la deuxième lame (30), la première lame présentant un prolongement distal (21, 22) s'étendant en direction de la deuxième lame (30) et au moins une partie de ce prolongement distal étant en recouvrement avec la deuxième lame vue selon une direction perpendiculaire au plan des lames, la première lame (20) comportant une région en saillie (24) par rapport au plan des lames et interceptant un plan (40') de positionnement du support plat (80), de telle sorte que lorsque le support plat (80) est disposé dans ledit plan de positionnement (40') et en position nominale de connexion, le prolongement distal (21, 22) soit en contact électrique et mécanique avec la deuxième lame (30).

6. Connecteur selon la revendication 5, caractérisé en ce que au moins une partie du prolongement distal (21, 22) est en recouvrement avec une extrémité distale (8) de la deuxième lame (30).

7. Connecteur selon une des revendications 5 ou 6, caractérisé en ce que la région en saillie (24) est disposée à proximité dudit prolongement distal (21, 22).

8. Connecteur selon une des revendications 5 à 7, caractérisé en ce qu'il comporte une région de butée (9, 7) pour former une butée pour le support plat (80) selon une ligne de butée (AA, BB) et en ce que la région en saillie (24) est disposée à proximité de la ligne de butée (AA, BB) de telle sorte que ledit contacteur forme un détecteur de fin de course du support plat (80).

9. Connecteur selon une des revendications 5 à 8, caractérisé en ce que le prolongement distal est constitué par un doigt (21) ayant un axe longitudinal sensiblement perpendiculaire à l'axe longitudinal de la deuxième lame métallique (30).

10. Connecteur selon une des revendications 5 à 9, caractérisé en ce que le prolongement distal (21, 22) est situé en aval de la ligne de butée (AA, BB) de la carte (80) par rapport à la direction d'insertion (F) de celle-ci.

## Claims

1. Electrical contact strip for detecting the end of travel of a card for a card connector comprising adjacent contact blades, the said strip including at least one pair of adjacent contact blades (10, 20, 30) each having a longitudinal axis and a first blade (20) of which has a greater developed length than the second blade (30), the first blade having a distal extension (21, 22) which extends towards the second blade (30), characterized in that the first blade (20) includes a region (24) which projects from the plane of the strip and in that at least part of the distal extension overlaps the second blade (30) when seen in a direction perpendicular to the plane of the strip.

2. Contact strip according to Claim 1, characterized in that the distal extension (21, 22) overlaps a distal end (8) of the second blade.

3. Contact strip according to either of Claims 1 and 2, characterized in that the projecting region (24) lies near the said distal extension (21, 22).

4. Contact strip according to one of the preceding claims, characterized in that the said distal extension (21, 22) consists of a finger (21) having a longitudinal axis approximately perpendicular to the longitudinal axis of the second blade (30).

5. Connector for a flat medium such as an electronic card, comprising a contactor for detecting the presence of the flat medium, characterized in that the said contactor includes a pair of adjacent contact blades (20, 30) lying in the same plane and each having a longitudinal axis, and a first blade (20) of which has a greater developed length than the second blade (30), the first blade having a distal extension (21, 22) which extends towards the second blade (30) and at least part of this distal extension overlapping the second blade when seen in a direction perpendicular to the plane of the blades, the first blade (20) including a region (24) which projects from the plane of the blades and intercept a plane (40') for positioning the flat medium (80), in such a way that, when the flat medium (80) lies in the said positioning plane (40') and in the nominal connection position, the distal extension (21, 22) is in electrical and mechanical contact with the second blade (30).

6. Connector according to Claim 5, characterized in that at least part of the distal extension (21, 22) overlaps a distal end (8) of the second blade (30).

7. Connector according to either of Claims 5 and 6, characterized in that the projecting region (24) lies near the said distal extension (21, 22).

8. Connector according to one of Claims 5 to 7, characterized in that it includes a stop region (9, 7) which forms a stop for the flat medium (80) along a stop line (AA, BB) and in that the projecting region (24) lies near the stop line (AA, BB) in such a way that the said contactor forms a detector for detecting the end of travel of the flat medium (80).

9. Connector according to one of Claims 5 to 8, characterized in that the distal extension consists of a finger (21) having a longitudinal axis approximately perpendicular to the longitudinal axis of the second metal blade (30).

10. Connector according to one of Claims 5 to 9, characterized in that the distal extension (21, 22) is located downstream of the stop line (AA, BB) for the card (80) with respect to the direction of insertion (F) of the latter.

## Patentansprüche

1. Elektrische Kontakte in Bandform zur Erfassung der Endlage einer Karte für einen Kartenverbinder, mit benachbarten Kontaktzungen, wobei das Band mindestens ein Paar von benachbarten Kontaktzungen (10, 20, 30) aufweist, die je eine Längsachse besitzen und von denen eine erste Zunge (20) eine gestreckte Länge hat, die länger ist als die zweite Zunge (30), wobei die erste Zunge einen fernen Fortsatz (21, 22) aufweist, der sich in Richtung der zweiten Zunge (30) erstreckt, dadurch gekennzeichnet, daß die erste Zunge (20) einen Bereich (24) aufweist, der in Bezug auf die Ebene des Bands vorsteht, und daß mindestens ein Teil des fernen Fortsatzes die zweite Zunge (30) in einer Richtung überdeckt, die senkrecht zur Ebene des Bands liegt.

2. Kontaktband nach Anspruch 1, dadurch gekennzeichnet, daß der ferne Fortsatz (21, 22) ein fernes Ende (8) der zweiten Zunge überdeckt.

3. Kontaktband nach einem der Ansprüche 1 oder 2, dadurch gekennzeichnet, daß der vorstehende Bereich (24) in der Nähe des fernen Fortsatzes (21, 22) angeordnet ist.

4. Kontaktband nach einem der vorhergehenden Ansprüche, dadurch gekennzeichnet, daß der ferne Fortsatz (21, 22) aus einem Finger (21) besteht, dessen Längsachse im wesentlichen senkrecht zur Längsachse der zweiten Zunge (30) verläuft.

5. Verbinder für einen flachen Träger wie z.B. eine elektronische Karte, mit einem Kontaktglied zur Erfassung der Anwesenheit des flachen Trägers, dadurch gekennzeichnet, daß das Kontaktglied ein Paar von Zungen (20, 30) benachbarter Kontakte aufweist, die in der gleichen Ebene angeordnet sind und je eine Längsachse aufweisen und von denen eine erste Zunge (20) eine gestreckte Länge besitzt, die länger ist als die zweite Zunge (30), wobei die erste Zunge einen fernen Fortsatz (21, 22) aufweist, der sich in Richtung der zweiten Zunge (30) erstreckt und mindestens ein Teil dieses fernen Fortsatzes die zweite Zunge in einer Richtung senkrecht zur Ebene der Zungen überdeckt, wobei die erste Zunge (20) einen in Bezug auf die Ebene der Zungen vorstehenden Bereich (24) aufweist, der eine Positionierungsebene (40') des flachen Trägers (80) schneidet, so daß, wenn der flache Träger (80) sich in dieser Positionierungsebene (40') und in der nominalen Verbindungsposition befindet, der ferne Fortsatz (21, 22) mit der zweiten Zunge (30) in elektrischem und mechanischem Kontakt steht.

6. Verbinder nach Anspruch 5, dadurch gekennzeichnet, daß mindestens ein Teil des fernen Fortsatzes (21, 22) ein fernes Ende (8) der zweiten Zunge (30) überdeckt.

7. Verbinder nach einem der Ansprüche 5 oder 6, dadurch gekennzeichnet, daß der vorstehende Bereich (24) in der Nähe des fernen Fortsatzes (21, 22) angeordnet ist.

8. Verbinder nach einem der Ansprüche 5 bis 7, dadurch gekennzeichnet, daß er einen Anschlagbereich (9, 7) aufweist, um einen Anschlag für den flachen Träger (80) gemäß einer Anschlaglinie (AA, BB) zu bilden, und daß der vorstehende Bereich (24) in der Nähe der Anschlaglinie (AA, BB) angeordnet ist, so daß das Kontaktglied einen Detektor der Endlage des flachen Trägers (80) bildet.

9. Verbinder nach einem der Ansprüche 5 bis 8, dadurch gekennzeichnet, daß der ferne Fortsatz aus einem Finger (21) besteht, dessen Längsachse im wesentlichen senkrecht zur Längsachse der zweiten metallischen Zunge (30) liegt.

10. Verbinder nach einem der Ansprüche 5 bis 9, dadurch gekennzeichnet, daß der ferne Fortsatz (21, 22) sich stromabwärts hinter der Anschlaglinie (AA, BB) der Karte (80) in Bezug auf die Einschubrichtung (F) dieser Karte befindet.
